# DEMANDE DE BREVET EUROPEEN

(11) **EP 1 463 271 A1**
(43) Date de publication de la demande: **29.09.2004**
(21) Numéro de dépôt: 04290743.6
(22) Date de dépôt: 19.03.2004
(51) Int. Cl.: H04L 29/12

(54) **Système et procédé de transmission de données autorisant un adressage dynamique au moyen d'identifiants statiques**

(30) Priorité: 24.03.2003 FR 0303738
(71) Demandeur: SAGEM S.A., 75015 Paris (FR)
(72) Inventeur: Sartori, David, 78670 Villennes-sur-Seine (FR); Lagouarde, Sébastien, 78140 Velizy Villacoublay (FR); Dupuis, Nicolas, 78300 Poissy (FR)
(74) Mandataire: Maillet, Alain

(57) **Abrégé**

La présente invention concerne un système de transmission de données SYST incluant des terminaux FAX1 et FAX2 aptes à échanger des données via un réseau INTW, chaque terminal étant muni d'un identifiant de ressource standardisé et d'une adresse de protocole.

Selon l'invention, le système SYST inclut un dispositif de gestion NFS, apte à tenir à jour une table de correspondance TAB entre l'identifiant de ressource standardisé URIi de chaque terminal FAXi et son adresse de protocole courante AIPi, grâce à un identifiant dudit terminal qui relève de la couche physique du modèle OSI, préférentiellement une adresse de type MAC ou IEEE dudit terminal

Une consultation de la table de correspondance TAB permettra à chaque terminal de prendre connaissance, de manière transparente pour son utilisateur, de l'adresse de protocole AIPi courante de tout autre terminal FAXi que ledit utilisateur aura identifié en tant que destinataire au moyen du seul identifiant de ressource standardisé URIi de cet autre terminal FAXi.

## Description

### DOMAINE TECHNIQUE DE L'INVENTION

La présente invention concerne un système de transmission de données incluant au moins un premier terminal et un deuxième terminal aptes à échanger des données représentatives de documents écrits via un réseau de communication principal, chaque terminal étant muni d'un identifiant de ressource standardisé et d'une adresse dite de protocole compréhensible par un protocole de transmission dédié audit réseau principal.

### ARRIERE-PLAN TECHNOLOGIQUE DE L'INVENTION

De tels systèmes peuvent par exemple être utilisés pour permettre des transmissions de télécopies entre des premier et deuxième terminaux via un réseau de communication principal de type maillé comme le réseau Internet, lesquels premier et deuxième terminaux pourront être constitués par des télécopieurs ou des ordinateurs personnels émulant de tels télécopieurs. Dans un tel système, l'adresse de protocole d'un terminal donné sera constituée par une adresse conforme à un protocole de transmission IP (abréviation connue de l'homme du métier de l'expression anglaise "Internet Protocol") dédié au réseau Internet. Une telle adresse de protocole est susceptible de subir des variations dynamiques, c'est-à-dire de changer au fil du temps, par exemple par suite d'un déplacement physique du terminal entraînant une modification des conditions dans lesquelles ledit terminal est relié au réseau de communication maillé. Or, un utilisateur d'un terminal émetteur ne connaîtra en principe que l'identifiant de ressource standardisé d'un terminal destinataire vers lequel ledit utilisateur souhaite envoyer des données, cette adresse étant exprimée en un format aisément mémorisable par un esprit humain, tel le format URI (abréviation connue de l'homme du métier de l'expression anglaise "Uniform Resource Indicator"). C'est le terminal émetteur qui exécutera en interne une opération appelée résolution consistant à associer en interne, et de manière transparente pour son utilisateur, une adresse de protocole prédéfinie à l'identifiant standardisé du terminal destinataire choisi par l'utilisateur du terminal destinataire. Si l'adresse de protocole prédéfinie du terminal destinataire qui est connue du terminal émetteur est périmée, les données ne pourront être acheminées vers ce terminal destinataire.

L'état de la technique contient divers documents en rapport avec le problème de résolution d'adresses de protocole décrit ci-dessus.

Un brevet américain US 5,898,830 publié le 27 avril 1999, au nom de R. WESINGER *et al.,* décrit un dispositif de type passerelle pare-feu (connue de l'homme du métier de l'expression anglaise "Firewall") procurant une amélioration de la sécurité d'un réseau tout en assurant une certaine transparence pour un utilisateur. Il s'agit d'un système d'interconnexion de réseaux privés virtuels de type VPN (abréviation connue de l'homme du métier de l'expression anglaise "Virtual Private Network"). Ce document prévoit d'utiliser une technique de serveurs de noms de domaines appelée DNS abréviation connue de l'homme du métier de l'expression anglaise "Domain Name Server"), qui permet de connecter des terminaux à des passerelles, mais n'apporte pas de réponse au problème de la résolution des adresses de protocole.

Un autre brevet américain US 6,421,732, publié le 16 juillet 2002, au nom de H. ALKHATIB *et al.,* décrit un système de présentation de serveurs situés sur un réseau privé relié à l'Internet par une passerelle pare-feu. Une méthode de reconnexion est mise en oeuvre dans ladite passerelle pare-feu, c'est à dire qu'un terminal client ne se connectera pas directement à un serveur privé, mais directement à la passerelle pare-feu, laquelle passerelle se connectera ensuite au serveur privé. Cet autre brevet américain ne décrit aucun procédé de routage interne entre les deux connexions. Le système de présentation décrit par cet autre brevet américain offre une certaine sécurité mais semble contraignant vis-à-vis de protocoles applicatifs mis en oeuvre en son sein, notamment un protocole d'impression via Internet IPP (abréviation connue de l'homme du métier de l'expression anglaise "Internet Print Protocol") destiné à être appliqué à des télécopieurs de type "réseau".

### DESCRIPTION GENERALE DE L'INVENTION

L'un des buts de l'invention est donc de permettre à un utilisateur d'un terminal d'émettre des données vers un autre terminal dont l'adresse de protocole est susceptible de varier au cours du temps, sans qu'il soit nécessaire pour ledit utilisateur de connaître d'autres informations que l'identifiant de ressource standardisé de cet autre terminal, tout en évitant les inconvénients de l'art antérieur.

En effet, un système de transmission conforme au paragraphe introductif et autorisant grâce à l'invention un adressage dynamique au moyen d'identifiants statiques inclut en outre :
. des moyens de réception aptes à recevoir depuis un terminal émetteur une requête d'adresse de protocole courante d'un terminal destinataire identifié par son identifiant de ressource standardisé,
. des moyens d'émission destinés à envoyer en retour audit terminal émetteur l'adresse de protocole courante dudit terminal destinataire et
. un dispositif de gestion apte à tenir à jour une table de correspondance entre l'identifiant de ressource standardisé de chaque terminal et l'adresse de protocole courante dudit terminal et apte à recevoir depuis chaque terminal des messages de mise à jour de l'adresse de protocole dudit terminal, chaque message incluant une nouvelle adresse de protocole courante dudit terminal et une clé de contrôle d'accès propre audit terminal,
est caractérisé selon un aspect de l'invention en ce que ladite clé de contrôle d'accès est un identifiant dudit terminal qui relève de la couche physique du modèle OSI, préférentiellement une adresse de type MAC ou IEEE dudit terminal.

L'invention permet à chaque terminal de prendre connaissance, de manière transparente pour son utilisateur, de l'adresse de protocole courante de tout autre terminal que ledit utilisateur aura identifié en tant que destinataire au moyen de l'identifiant de ressource standardisé de cet autre terminal.

Les moyens de réception et d'émission permettront à chaque terminal de consulter les informations tenues à jour par le dispositif de gestion, et ce uniquement lorsqu'une telle opération sera nécessaire, ce qui permettra de limiter le volume de communications nécessaire à un bon acheminement de données entre les différents terminaux inclus dans le système de transmission conforme à l'invention.

Le fait que le dispositif de gestion soit apte à recevoir depuis chaque terminal des messages de mise à jour de l'adresse de protocole dudit terminal permet à chaque terminal de signaler de manière simple et sécurisée toute modification de son adresse de protocole au dispositif de gestion, ledit terminal authentifiant une telle mise à jour au moyen de la clé de contrôle d'accès qui lui est propre.

Le dispositif de gestion pourra alors utiliser, pour établir un lien entre l'identifiant de ressource standardisé d'un terminal et son adresse de protocole courante, la clé de contrôle d'accès propre au terminal considéré, ce qui permettra, d'une part, d'effectuer des mises à jour sécurisées de l'adresse de protocole courante, et, d'autre part, d'associer sans équivoque ladite adresse de protocole courante avec l'identifiant de ressource standardisé de ce terminal.

Le fait que la clé de contrôle d'accès propre à chaque terminal soit constituée par un identifiant dudit terminal qui relève de la couche physique du modèle OSI (abréviation connue de l'homme du métier de l'expression anglaise "Open System Interconnexion"), préférentiellement une adresse de type MAC ou IEEE dudit terminal, garantit une grande confidentialité des messages de mise à jour émis par chaque terminal, une telle clé de contrôle d'accès étant le plus souvent enregistrée de manière indélébile par ledit terminal lors de sa fabrication, par exemple au cours d'une opération d'écriture dans une mémoire dont seule une lecture ultérieure sera autorisée.

Dans certains modes de mise en oeuvre de l'invention, les différents terminaux inclus dans le système de transmission de données pourront être reliés individuellement au réseau de communication principal. Dans d'autres modes de mise en oeuvre de l'invention, un ou plusieurs terminaux pourront faire partie d'un réseau de communication local, par exemple un réseau interne à une entreprise, et être reliés au réseau de communication principal via un dispositif de protection par filtrage, par exemple de type passerelle pare-feu.

Dans une telle configuration, le dispositif de protection sera avantageusement muni de moyens de génération d'un message de mise à jour d'une adresse de protocole d'un terminal connecté audit dispositif de protection, ledit message de mise à jour incluant :
. un champ contenant l'identifiant de ressource standardisé associé au terminal considéré,
. un champ contenant l'adresse de protocole du dispositif de protection, et
. un champ contenant ledit identifiant dudit terminal qui relève de la couche physique du modèle OSI, préférentiellement une adresse de type MAC ou IEEE dudit terminal.

Un tel dispositif de protection fournira sa propre adresse de protocole au dispositif de gestion en lieu et place des adresses de protocole des terminaux connectés au réseau de communication qu'il protège, ledit dispositif de protection étant alors destiné à assurer par lui-même une répartition des données qu'il recevra, en fonction des identifiants de ressource standardisés attribués par leurs émetteurs auxdites donnés, le dispositif de protection jouant alors le rôle d'un dispositif de gestion secondaire destiné à tenir à jour une table de correspondance entre l'identifiant de ressource standardisé de chaque terminal connecté au réseau de communication secondaire qu'il protège, d'une part, et l'adresse de protocole dédiée audit réseau secondaire qui aura été attribuée audit terminal, d'autre part.

Dans un mode de mise en oeuvre particulier d'une telle variante, le dispositif de protection attribuera à au moins un terminal du réseau secondaire auquel il est connecté, et de préférence à chacun de ces terminaux, une adresse de protocole dérivée d'une adresse de protocole propre audit dispositif de protection, d'une part, et d'un numéro de connexion du terminal considéré audit dispositif de protection, préférentiellement un numéro de port, d'autre part.

Un tel dispositif de protection remplacera en quelque sorte par sa propre adresse de protocole l'adresse de protocole de chaque terminal relié au réseau de communication secondaire protégé par ledit dispositif de protection, et communiquera cette adresse au dispositif de gestion. De cette manière, tout paquet de données destiné à un terminal protégé par ce dispositif de protection sera expédié *via* le réseau de communication principal vers ledit dispositif de protection, qui pourra contrôler son transfert vers le terminal considéré, chaque terminal étant identifié par le dispositif de protection par un numéro de connexion spécifique.

De la sorte, des terminaux non-connectés au réseau de communication secondaire pourront extraire du dispositif de gestion une adresse de destination finale qui pourra être attribuée à des paquets de données destinés à des terminaux connectés à un réseau secondaire via un dispositif de protection.

L'invention concerne également, selon un autre aspect de l'invention, un procédé de transmission de données autorisant un adressage dynamique au moyen d'identifiants statiques entre au moins un premier et un deuxième terminal aptes à échanger des données représentatives de documents écrits via un réseau de communication principal, chaque terminal étant muni d'un identifiant de ressource standardisé et d'une adresse dite de protocole compréhensible par un protocole de transmission dédié audit réseau principal, lequel procédé inclus en outre les étapes suivantes, destinées à être exécutées par un dispositif de gestion :
. une étape de mise à jour d'une table de correspondance entre l'identifiant de ressource standardisé de chaque terminal et l'adresse de protocole courante dudit terminal,
. une étape de réception depuis un terminal émetteur d'une requête d'adresse de protocole courante d'un terminal destinataire identifié par son identifiant de ressource standardisé,
. une étape d'émission en retour vers ledit terminal émetteur de l'adresse de protocole courante dudit terminal destinataire,
. au moins une étape de réception par le dispositif de gestion d'au moins un message de mise à jour de l'adresse de protocole dudit terminal, ledit message de mise à jour incluant une clé de contrôle d'accès propre audit terminal et une nouvelle adresse de protocole courante dudit terminal,
procédé caractérisé en ce que ladite clé de contrôle d'accès est un identifiant dudit terminal qui relève de la couche physique du modèle OSI, préférentiellement une adresse de type MAC ou IEEE dudit terminal.

Si au moins l'un des terminaux appartient à un réseau de communication secondaire qui est connecté au réseau de communication principal via un dispositif de protection par filtrage, un procédé tel que décrit plus haut pourra en outre inclure une étape de génération d'un message de mise à jour d'une adresse de protocole d'un terminal connecté audit dispositif de protection, ledit message de mise à jour incluant :
. un champ contenant l'identifiant de ressource standardisé associé au terminal considéré,
. un champ contenant l'adresse de protocole du dispositif de protection, et
. un champ contenant ledit identifiant dudit terminal qui relève de la couche physique du modèle OSI, préférentiellement une adresse de type MAC ou IEEE dudit terminal.

Un procédé tel que décrit plus haut pourra en outre inclure une étape d'attribution à au moins un terminal dudit réseau secondaire d'une adresse de protocole dérivée d'une adresse de protocole propre audit dispositif de protection, d'une part, et d'un numéro de connexion du terminal considéré audit dispositif de protection, préférentiellement un numéro de port, d'autre part.

Selon un autre de ses aspects, l'invention concerne également, en tant que moyen utile à sa mise en oeuvre, un terminal destiné à être inclus dans un système de transmission tel que décrit plus haut, et incluant au moins un module électronique de type carte LAN ou ASIC apte à gérer une connexion dudit terminal à un réseau secondaire de type Ethernet. Un tel terminal pourra être matérialisé par un télécopieur, mais aussi par un ordinateur ou par un organiseur personnel munis de moyens pour émuler un télécopieur.

Selon encore un autre de ses aspects, l'invention concerne également, en tant que moyen utile à sa mise en oeuvre, une trame porteuse d'un message de mise à jour de l'adresse de protocole d'un terminal inclus dans un système de transmission tel que décrit plus haut, caractérisée en ce que ledit message inclut au moins une clé de contrôle d'accès propre audit terminal et une nouvelle adresse de protocole courante dudit terminal, une partie de la trame associée à ladite clé de contrôle d'accès comportant une référence en ASCII, une référence en binaire ou une référence cryptée à une adresse de type MAC ou IEEE dudit terminal.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est un diagramme fonctionnel qui illustre une exécution d'une phase de mise à jour dans un système de transmission conforme à un mode de réalisation particulier de l'invention,
La Fig.2 est un diagramme fonctionnel qui illustre une exécution d'une phase de transmission dans un tel système, et
La Fig.3 est un diagramme fonctionnel qui représente une variante d'un tel système selon laquelle au moins un terminal appartient à un réseau de communication secondaire.

### DESCRIPTION DE MODES DE REALISATION PARTICULIERS DE L'INVENTION

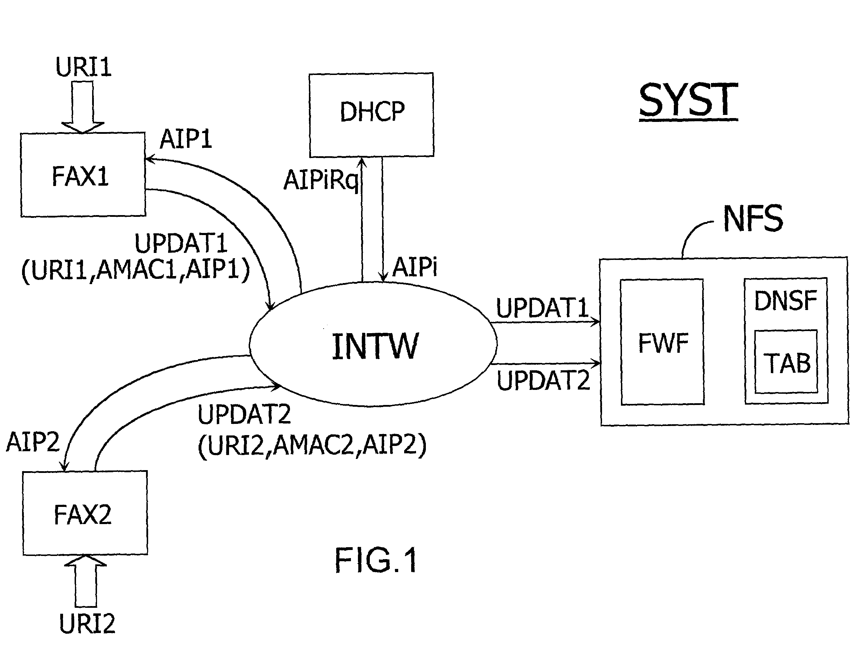

La Fig.1 représente schématiquement un système de transmission de données SYST incluant au moins un premier terminal FAX1 et un deuxième terminal FAX2, par exemple des télécopieurs, aptes à échanger des données représentatives de documents écrits via un réseau de communication principal INTW, dans cet exemple le réseau Internet. Lors de la fabrication de chaque terminal FAX1 ou FAX2, une adresse de contrôle d'accès propre AMAC1 ou AMAC2 aura été attribuée audit terminal, laquelle adresse sera de préférence constituée par une information de type MAC, qui aura été enregistrée de manière indélébile par ledit terminal, par exemple au cours d'une opération d'écriture dans une mémoire dont seule une lecture ultérieure sera autorisée.

Chaque terminal FAX1 ou FAX2 est en outre muni d'un identifiant de ressource standardisé URI1 ou URI2, respectivement, cette adresse étant choisie par un utilisateur du terminal considéré et exprimée en un format aisément mémorisable par un esprit humain, tel le format URI. L'identifiant de ressource standardisé URIi du terminal FAXi (pour i=1 ou 2) sera par exemple saisi via un clavier dont est muni le terminal FAXi par son utilisateur, et pourra par exemple revêtir une forme du type "Useri.netfax.sagem".

Chaque terminal FAX1 ou FAX2 est destiné à être muni par un gestionnaire dynamique d'hôtes DHCP d'une adresse de protocole compréhensible par un protocole de transmission dédié au réseau principal INTW, c'est-à-dire d'une adresse IP dans le présent exemple. A cet effet, chaque terminal FAX1 ou FAX2 devra émettre vers ledit gestionnaire dynamique d'hôtes DHCP une requête AIPiRq d'attribution d'une telle adresse de protocole, et recevra en retour une adresse de protocole AIPi (pour i=1 ou 2).

Le système SYST inclut en outre un dispositif de gestion NFS des terminaux FAX1 et FAX2, apte à tenir à jour une table de correspondance TAB entre l'identifiant de ressource standardisé URIi de chaque terminal FAXi et l'adresse de protocole courante AIPi dudit terminal FAXi. Ce dispositif de gestion pourra par exemple être constitué par un serveur.

Une consultation de la table de correspondance TAB tenue à jour par le dispositif de gestion NFS permettra à chaque terminal FAX1 ou FAX2 de prendre connaissance, de manière transparente pour son utilisateur, de l'adresse de protocole courante de tout autre terminal, dans cet exemple FAX2 ou FAX1, que ledit utilisateur aura identifié en tant que destinataire au moyen de l'identifiant de ressource standardisé URI2 et URI1, respectivement, de cet autre terminal FAX2 ou FAX1.

Après réception de leurs adresses de protocole AIP1 et AIP2 depuis le gestionnaire dynamique d'hôtes DHCP, les premier et deuxième terminaux FAX1 et FAX2 pourront envoyer des messages de mise à jour UPDAT1 et UPDAT2 au dispositif de gestion NFS, qui pourront être écrits sous les formes suivantes :

| UPDAT1 | | | | |
|---|---|---|---|---|
| fax1.netfax.sagem | IN | A | 100.1.1.1 | (AIP1) |
| fax1.netfax.sagem | IN | TXT | "macADDR=00:40:8C:5C:E8:E7" | (AMAC1) |
| User1.netfax.sagem | IN | CNAME | fax1.netfax.sagem | (URI1) |

et

| UPDAT2 | | | | |
|---|---|---|---|---|
| fax2.netfax.sagem | IN | A | 24.1.45.1 | (AIP2) |
| fax2.netfax.sagem | IN | TXT | "macADDR=00:40:8C:5C:F6:D9" | (AMAC2) |
| User1.netfax.sagem | IN | CNAME | fax2.netfax.sagem | (URI2) |

Les messages UPDAT1 et UPDAT2 décrits ci-dessus incluent chacun un indicateur ressource standardisé URI1 et UR2, respectivement "User1.netfax.sagem" et URI2="User2.netfax.sagem", et contenus dans les champs intitulés "fax1.netfax.sagem" et "fax2.netfax.sagem" attribués aux premier et deuxième terminaux FAX1 et FAX2. Ces messages UPDAT1 et UPDAT2 incluent en outre des clés de contrôle d'accès matérialisées par des adresses de contrôle d'accès AMAC1 et AMAC2 propres aux premier et deuxième terminaux FAX1 et FAX2, qui sont dans cet exemple sont respectivement égales à 00:40:8C:5C:E8:E7 et 00:40:8C:5C:F6:D9.

Les messages UPDAT1 et UPDAT2 décrits ci-dessus incluant chacun une adresse de contrôle d'accès AMAC1 ou AMAC2 déjà connue du dispositif de protection FWF, leur transmission aux moyens de mise à jour dynamiques DNSF de la table de correspondance TAB sera autorisée, ladite table TAB établissant alors une correspondance entre l'identifiant de ressource standardisé URIi de chaque terminal FAXi (pour i=1 ou 2) et l'adresse de protocole courante AIPi dudit terminal FAXi.

Chaque message de mise à jour UPDAT1 et UPDAT2 décrit ci-dessus sera avantageusement porté par une trame de données, qui pourra par exemple être compatible avec un format défini par un document RFC2136 publié par l'organisme IETF. Chaque trame porteuse d'un tel message de mise à jour contiendra une partie qui sera associée à la clé de contrôle d'accès et incluse dans un champ dénommé "Prerequisite" dans ledit document RFC2136. Ce champ "Prerequisite" pourra inclure une référence en ASCII, une référence en binaire ou une référence cryptée à l'adresse AMAC1 ou AMAC2 du terminal concerné par ce message de mise à jour UPDAT1 ou UPDAT2, un tel cryptage pouvant être réalisé au moyen d'un algorithme par défaut de type MD5/RSA spécifié dans un autre document RFC2065 publié par l'organisme IETF.

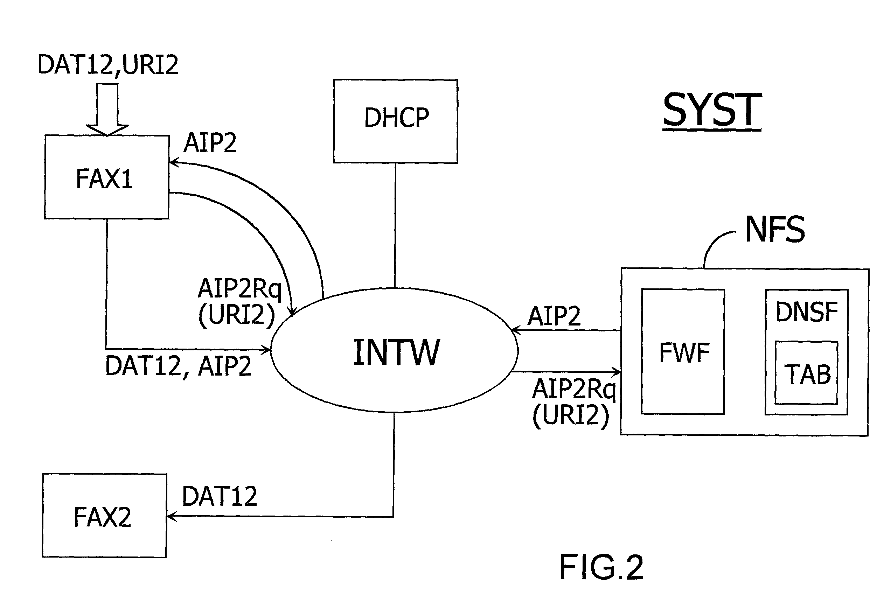

La Fig.2 est un schéma fonctionnel qui illustre le déroulement d'une transmission de données entre les premier et deuxième terminaux FAX1 et FAX2 dans le système de transmission SYST décrit ci-dessus. De mêmes références ont été attribuées à des éléments communs aux deux figures, lesquels éléments communs ne seront pas à nouveau décrits ici.

Après qu'un utilisateur du premier terminal FAX1 aura saisi des données DAT12 constituant un message écrit et aura défini au moyen de l'identifiant de ressource standardisé URI2 le deuxième terminal FAX2 comme étant le destinataire desdites données, le premier terminal émettra vers le dispositif de gestion NFS une requête AIP2Rq aux fins de se voir communiquer en retour l'adresse de protocole courante AIP2 du terminal destinataire FAX2 identifié dans ladite requête par l'identifiant de ressource standardisé URI2. Cette requête AIP2Rq inclura subsidiairement l'adresse de contrôle d'accès AMAC1 de son émetteur, de manière à faciliter son passage au travers du dispositif de protection FWF vers les moyens de mise à jour dynamiques DNSF de la table de correspondance TAB, qui serviront alors de moyens de lecture de ladite table.

Ainsi qu'exposé précédemment, l'utilisation qui est faite par le dispositif de gestion de l'adresse de contrôle d'accès propre à chaque terminal, pour établir un lien entre l'identifiant de ressource standardisé de ce terminal et son adresse de protocole courante permet d'associer sans équivoque ladite adresse de protocole courante avec l'identifiant de ressource standardisé de ce terminal.

Le dispositif de gestion NFS enverra alors au premier terminal FAX1, en réponse à la requête AIP2Rq qu'il a émise, l'adresse de protocole courante AIP2 du terminal destinataire FAX2. Le premier terminal FAX1 attribuera alors ladite adresse de protocole à un ensemble de paquets de données DAT12 formant le message destiné au deuxième terminal FAX2, lesquels paquets de données pourront alors être aisément routés vers leur destinataire ainsi identifié, au travers du réseau de communication principal INTW selon un processus connu en lui-même de l'homme du métier.

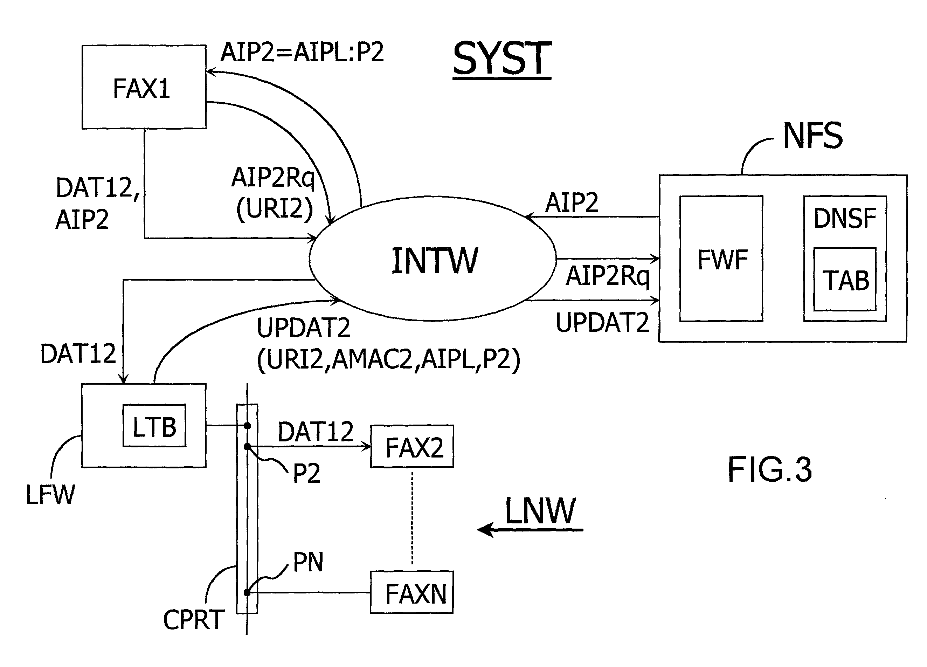

La Fig.3 représente une variante du système SYST décrit ci-dessus, qui inclut un réseau de communication secondaire LNW auquel appartiennent dans cet exemple un nombre N-1 de terminaux FAX2...FAXN, parmi lesquels le deuxième terminal FAX2. Le réseau de communication secondaire LNW pourra par exemple être constitué par un réseau Intranet appartenant à une entreprise et exclusivement mis à disposition des employés de ladite entreprise. Dans ce mode de mise en oeuvre particulier de l'invention, le réseau de communication secondaire LNW est connecté au réseau de communication principal INTW via un dispositif de protection par filtrage LFW, par exemple du type passerelle pare-feu évoqué plus haut. Ce dispositif de protection LFW est muni d'un port de connexion CPRT et attribue à chaque terminal FAX2...FAXN du réseau secondaire LNW qui est connecté audit port de connexion CPRT une adresse de protocole dérivée d'une adresse de protocole AIPL propre audit dispositif de protection LFW, d'une part, et d'un numéro Pj de connexion du terminal FAXj (pour j=2 à N) considéré audit dispositif de protection LFW, d'autre part.

Ainsi, si par exemple l'adresse de protocole AIPL propre audit dispositif de protection LFW est égale à 100.1.1.1, et si le numéro P2 de connexion du deuxième terminal FAX2 audit dispositif de protection LFW est égal à 80, le dispositif de protection attribuera une adresse de protocole AIP2 égale à 100.1.1.1:80 audit deuxième terminal FAX2, laquelle adresse de protocole pourra être mémorisée dans une table de correspondance locale LTB au sein du dispositif de protection LFW. On peut ainsi écrire que l'adresse de protocole AIP2 est une concaténation AIPL:P2 de l'adresse de protocole AIPL avec le numéro de connexion P2.

Le dispositif de protection LFW remplace donc essentiellement par sa propre adresse de protocole l'adresse de protocole de chaque terminal FAX2...FAXN inclus dans le réseau de communication secondaire LNW protégé par ledit dispositif de protection LFW, et communiquera cette adresse au dispositif de gestion NFS. De cette manière, tout paquet de données destiné à un terminal FAX2... FAXN protégé par ce dispositif de protection LFW sera expédié *via* le réseau de communication principal INTW vers ledit dispositif de protection LFW, qui pourra contrôler son transfert vers le terminal considéré, chaque terminal FAXj (pour i=2 à j) étant identifié par le dispositif de protection par un numéro de connexion Pj spécifique.

Ainsi, si l'utilisateur du premier terminal FAX1 souhaite envoyer un message écrit constitué par des données DAT12 vers le deuxième terminal FAX2, le premier terminal FAX1 émettra vers le dispositif de gestion NFS une requête AIP2Rq aux fins de se voir communiquer l'adresse de protocole du deuxième terminal FAX2 en stipulant l'identifiant de ressource standardisé URI2 dudit deuxième terminal FAX2, ainsi qu'exposé ci-dessus. En retour, le premier terminal FAX1 recevra, l'adresse de protocole courante AIP2 du terminal destinataire FAX2 telle que définie par le dispositif de protection LFW du réseau de communication secondaire, soit AIP2=AIPL:P2. Le premier terminal FAX1 attribuera alors ladite adresse de protocole AIP2 aux paquets de données DAT12 formant le message destiné au deuxième terminal FAX2, lesquels paquets de données seront alors routés, en premier lieu via le réseau de communication principal INTW vers le dispositif de protection LFW identifié par son adresse de protocole propre AIPL, et en second lieu et seulement si ledit dispositif de protection LFW l'autorise, via le réseau de communication secondaire LNW vers le destinataire final identifié par son numéro de connexion propre P2, c'est-à-dire le deuxième terminal FAX2.

Le dispositif de protection LFW doit donc contribuer à tenir à jour les informations mémorisées dans la table de correspondance TAB du dispositif de gestion NFS. Pour ce faire, à chaque fois que l'un des terminaux qui lui sont connectés subira un changement dans ses conditions de connexion, par exemple un changement de numéro de connexion P2 pour le deuxième terminal FAX2, le dispositif de protection LFW générera un message de mise à jour UPDAT2 de l'adresse de protocole du terminal concerné, ledit message de mise à jour incluant :
. un champ contenant l'identifiant de ressource standardisé URI2 associé au terminal considéré, dans cet exemple le terminal FAX2,
. un champ contenant l'adresse de protocole AIPL du dispositif de protection LFW, et
. un champ contenant le numéro de connexion P2 du terminal considéré, dans cet exemple le terminal FAX2

Ce message de mise à jour UPDAT2 sera en principe authentifié par l'adresse de contrôle d'accès AMAC2 propre au terminal considéré, dans cet exemple le terminal FAX2, conformément à la description qui précède.

Il apparaît donc que les messages de mise à jour sont susceptibles de revêtir différentes formes selon que les terminaux qu'ils concernent appartiennent ou non à un réseau de communication secondaire. Dans un mode de mise en oeuvre particulier de l'invention, on pourra choisir un format standard pour tous les messages de mise à jour, format selon lequel tout message de mise à jour inclura un champ de type TXT indiquant si le terminal considéré est ou non connecté à un réseau secondaire et un autre champ de type TXT qui indiquera, dans l'affirmative, le numéro de connexion de ce terminal, ou, dans la négative, un numéro non-réservé et dépourvu de toute signification.

Selon un mode de mise en oeuvre différent de la variante décrite ci-dessus, le dispositif de protection LFW pourra ne fournir que sa propre adresse de protocole au dispositif de gestion NFS en lieu et place de l'ensemble des adresses de protocole des terminaux FAX2...FAXN connectés au réseau de communication LNW qu'il protège. Un tel dispositif de protection LFW assurera par lui-même une répartition des données qu'il recevra, en fonction des identifiants de ressource standardisés URIj (pour j=2 à N) attribués par leurs émetteurs auxdites données, le dispositif de protection jouant alors le rôle d'un dispositif de gestion secondaire destiné à tenir à jour une table de correspondance, par exemple la table secondaire LTB, entre l'identifiant de ressource standardisé URIj de chaque terminal FAXj connecté au réseau de communication secondaire LNW, d'une part, et une adresse de protocole IPAj qui aura été attribuée audit terminal FAXj, d'autre part, ladite adresse de protocole IPAj pouvant être qualifiée d'interne car uniquement valable pour ledit réseau secondaire LNW

Cet autre mode de mise en oeuvre est avantageux en ce qu'il prévoit de ne communiquer que des données publiques au dispositif de gestion NFS qui est accessible via le réseau de communication principal INTW qui est en principe un réseau public, lesquelles données publiques sont constituées pour chaque terminal FAXj (pour j=2 à N) par l'identifiant de ressource standardisé URIj dudit terminal FAXj, d'une part, et par l'adresse de protocole AIPL du dispositif de protection LFW qui doit lui être associée dans la table de correspondance TAB, d'autre part. Des données privées relatives au réseau secondaire LNW telles l'adresse de contrôle d'accès AMACj de chaque terminal FAXj et son numéro de connexion Pj, qui sont nécessaires à l'acheminement de données vers ce terminal seront connues du dispositif de protection LFW qui assurera une tenue à jour du contenu de sa table de correspondance locale LTB, laquelle table permettra au dispositif de protection LFW d'aiguiller un paquet de données entrant vers un destinataire FAXj qui sera identifié par un identifiant de ressources standardisé URIj inclus dans ou adjoint à ce paquet de données. Ceci permet de limiter une dissémination d'informations privées à l'extérieur du réseau de communication secondaire LNW, et favorise la protection de ce réseau contre des attaques en provenance de l'extérieur.

Par ailleurs, l'utilisation de dispositifs de protection de réseaux de communication secondaires pour effectuer une partie des tâches dévolues selon le principe général de l'invention au dispositif de gestion NFS permet de décentraliser les opérations de tenue à jour et de communication des adresses de protocole courantes des différents terminaux, et donc en théorie d'augmenter la flexibilité et la rapidité de fonctionnement du système de transmission de données conforme à l'invention.

## Revendications

1. Système de transmission de données autorisant un adressage dynamique au moyen d'identifiants statiques incluant au moins un premier terminal et un deuxième terminal aptes à échanger des données représentatives de documents écrits via un réseau de communication principal, chaque terminal étant muni d'un identifiant de ressource standardisé et d'une adresse dite de protocole compréhensible par un protocole de transmission dédié audit réseau principal, ledit système incluant en outre :
. des moyens de réception aptes à recevoir depuis un terminal émetteur une requête d'adresse de protocole courante d'un terminal destinataire identifié par son identifiant de ressource standardisé,
. des moyens d'émission destinés à envoyer en retour audit terminal émetteur l'adresse de protocole courante dudit terminal destinataire et
. un dispositif de gestion apte à tenir à jour une table de correspondance entre l'identifiant de ressource standardisé de chaque terminal et l'adresse de protocole courante dudit terminal et apte à recevoir depuis chaque terminal des messages de mise à jour de l'adresse de protocole dudit terminal, chaque message incluant une nouvelle adresse de protocole courante dudit terminal et une clé de contrôle d'accès propre audit terminal,
système de transmission **caractérisé en ce que** ladite clé de contrôle d'accès est un identifiant dudit terminal qui relève de la couche physique du modèle OSI, préférentiellement une adresse de type MAC ou IEEE dudit terminal.

2. Système de transmission de données selon la revendication 1, **caractérisé en ce qu'**au moins l'un des terminaux appartient à un réseau de communication secondaire connecté au réseau de communication principal via un dispositif de protection par filtrage, lequel dispositif de protection est muni de moyens de génération d'un message de mise à jour d'une adresse de protocole d'un terminal connecté audit dispositif de protection, ledit message de mise à jour incluant :
. un champ contenant l'identifiant de ressource standardisé associé au terminal considéré,
. un champ contenant l'adresse de protocole du dispositif de protection, et
. un champ contenant ledit identifiant dudit terminal qui relève de la couche physique du modèle OSI, préférentiellement une adresse de type MAC ou IEEE dudit terminal.

3. Système de transmission de données selon la revendication 2, **caractérisé en ce que** le dispositif de protection est apte à attribuer à au moins un terminal du réseau secondaire auquel il est connecté une adresse de protocole dérivée d'une adresse de protocole propre audit dispositif de protection, d'une part, et d'un numéro de connexion du terminal considéré audit dispositif de protection, préférentiellement un numéro de port, d'autre part.

4. Procédé de transmission de données autorisant un adressage dynamique au moyen d'identifiants statiques entre au moins un premier et un deuxième terminal aptes à échanger des données représentatives de documents écrits via un réseau de communication principal, chaque terminal étant muni d'un identifiant de ressource standardisé et d'une adresse dite de protocole compréhensible par un protocole de transmission dédié audit réseau principal, lequel procédé inclus en outre les étapes suivantes, destinées à être exécutées par un dispositif de gestion :
. une étape de mise à jour d'une table de correspondance entre l'identifiant de ressource standardisé de chaque terminal et l'adresse de protocole courante dudit terminal,
. une étape de réception depuis un terminal émetteur d'une requête d'adresse de protocole courante d'un terminal destinataire identifié par son identifiant de ressource standardisé,
. une étape d'émission en retour vers ledit terminal émetteur de l'adresse de protocole courante dudit terminal destinataire,
. au moins une étape de réception par le dispositif de gestion d'au moins un message de mise à jour de l'adresse de protocole dudit terminal, ledit message de mise à jour incluant une clé de contrôle d'accès propre audit terminal et une nouvelle adresse de protocole courante dudit terminal,
procédé **caractérisé en ce que** ladite clé de contrôle d'accès est un identifiant dudit terminal qui relève de la couche physique du modèle OSI, préférentiellement une adresse de type MAC ou IEEE dudit terminal.

5. Procédé de transmission de données selon la revendication 4, **caractérisé en ce que**, au moins l'un des terminaux appartenant à un réseau de communication secondaire qui est connecté au réseau de communication principal via un dispositif de protection par filtrage, ledit procédé inclut en outre une étape de génération d'un message de mise à jour d'une adresse de protocole d'un terminal connecté audit dispositif de protection, ledit message de mise à jour incluant :
. un champ contenant l'identifiant de ressource standardisé associé au terminal considéré,
. un champ contenant l'adresse de protocole du dispositif de protection, et
. un champ contenant ledit identifiant dudit terminal qui relève de la couche physique du modèle OSI, préférentiellement une adresse de type MAC ou IEEE dudit terminal.

6. Procédé de transmission de données selon la revendication 5, **caractérisé en ce qu'**il inclut en outre une étape d'attribution à au moins un terminal dudit réseau secondaire d'une adresse de protocole dérivée d'une adresse de protocole propre audit dispositif de protection, d'une part, et d'un numéro de connexion du terminal considéré audit dispositif de protection, préférentiellement un numéro de port, d'autre part.

7. Terminal destiné à être inclus dans un système de transmission selon l'une des revendications 2 ou 3, **caractérisé en ce qu'**il inclut au moins un module électronique de type carte LAN ou ASIC apte à gérer une connexion dudit terminal à un réseau secondaire de type Ethernet.

8. Trame porteuse d'un message de mise à jour de l'adresse de protocole d'un terminal inclus dans un système de transmission selon l'une des revendications 1 à 3, **caractérisée en ce que** ledit message inclut au moins une clé de contrôle d'accès propre audit terminal et une nouvelle adresse de protocole courante dudit terminal, une partie de la trame associée à ladite clé de contrôle d'accès comportant une référence en ASCII à une adresse de type MAC ou IEEE dudit terminal.

9. Trame porteuse d'un message de mise à jour de l'adresse de protocole d'un terminal inclus dans un système de transmission selon l'une des revendications 1 à 3, **caractérisée en ce que** ledit message inclut au moins une clé de contrôle d'accès propre audit terminal et une nouvelle adresse de protocole courante dudit terminal, une partie de la trame associée à ladite clé de contrôle d'accès comportant une référence en binaire à une adresse de type MAC ou IEEE dudit terminal.

10. Trame porteuse d'un message de mise à jour de l'adresse de protocole d'un terminal inclus dans un système de transmission selon l'une des revendications 1 à 3, **caractérisée en ce que** ledit message inclut au moins une clé de contrôle d'accès propre audit terminal et une nouvelle adresse de protocole courante dudit terminal, une partie de la trame associée à ladite clé de contrôle d'accès comportant une référence cryptée à une adresse de type MAC ou IEEE dudit terminal.
